# FASCICULE DE BREVET EUROPEEN

(11) **EP 0 533 522 B1**
(45) Date de publication et mention de la délivrance du brevet: **14.06.1995**
(21) Numéro de dépôt: 92402398.9
(22) Date de dépôt: 03.09.1992
(51) Int. Cl.: F16L 59/14

(54) **Ligne de transfert de fluide cryogénique**
Übertragungsleitung für kryogenes Fluid
Cryogenic fluid transfer line

(30) Priorité: 20.09.1991 FR 9111596
(43) Date de publication de la demande: 24.03.1993
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Boissin, Jean-Claude, F-38330 Saint Ismer (FR)
(74) Mandataire: Le Moenner, Gabriel

(56) Documents cités:
- GB-A- 1 274 285
- GB-A- 1 451 093
- DATABASE WPIL Section PQ, Week 8624, Derwent Publications Ltd., London, GB; Class Q67, AN 86-154245 & SU-A-1 190 139 (CORRESP POLY) 7 Novembre 1985

## Description

La présente invention concerne les lignes de transfert de fluide cryogénique du type comprenant une conduite de transfert de fluide cryogénique, une conduite de fluide de refroidissement et une feuille métallique formant écran, bobinée autour des conduites et couplée thermiquement à la conduite de refroidissement.

Les caractéristiques ci-dessus se retrouvent dans le document GB-A-1.451.093 qui décrit une double conduite de transfert suspendue dans un tube formant écran radiatif en contact avec une première conduite de refroidissement et entouré, avec cette dernière, par une feuille métallique serrée par une deuxième conduite de refroidissement s'étendant le long de la première.

Des lignes de transfert de ce type sont prévues pour des équipements travaillant à très basse température, typiquement au-dessous de 50K, tels que les cavités résonnantes supraconductrices et les aimants supraconducteurs d'accélérateurs de particules qui sont refroidis et maintenus en froid par de l'hélium liquide à une température inférieure à 5K, le fluide de refroidissement de l'écran étant généralement de l'azote liquide. Le bon fonctionnement de l'écran métallique, dit "actif", nécessite qu'il soit en bon contact avec le tube de refroidissement. Pour ces raisons, dans les techniques industrielles connues, l'écran métallique est constitué de profilés extrudés en aluminium ou en cuivre comprenant un ou plusieurs canaux dans lesquels circule le fluide de refroidissement. Ces techniques industrielles connues présentent les inconvénients de prix de revient extrêmement élevés, d'une grande inertie thermique résultant de l'épaisseur des profilés constituant l'écran actif, d'une grande rigidité pouvant poser des problèmes de contraction thermique, ainsi que d'une mauvaise accessibilité à la ligne du transfert de fluide cryogénique le plus froid.

La présente invention a pour objet de proposer une nouvelle structure de ligne de transfert de conception simple et de très faibles coûts de revient, présentant des caractéristiques thermiques analogues aux techniques antérieures, permettant de nombreuses adaptations et autorisant une bonne accessibilité à la ligne de transfert intérieure.

Pour ce faire, selon une caractéristique de l'invention, la feuille est bobinée de façon lâche autour des conduites et la ligne la ligne comprend une pluralité de moyens de liaison espacés le long de la conduite de refroidissement pour solidariser localement la feuille à cette dernière.

Selon des caractéristiques plus particulières de l'invention, les moyens de liaison comprennent des moyens de serrage mécanique et/ou une couche d'un matériau de liaison.

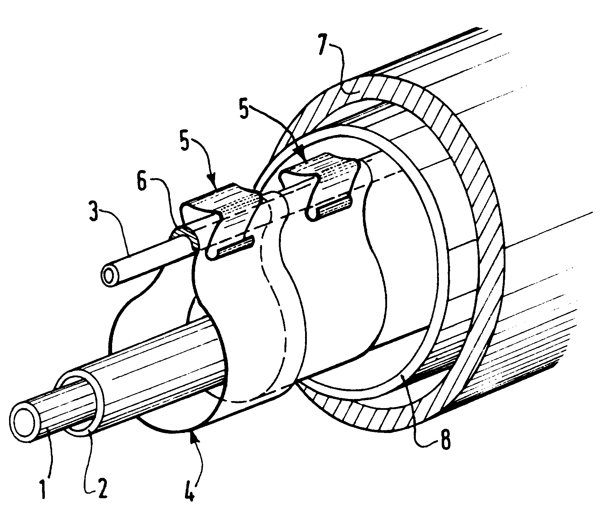

D'autres avantages de la présente invention ressortiront de la description suivante d'un mode de réalisation, donné à titre illustratif mais nullement limitatif, faite en relation avec le dessin annexé sur lequel :
La planche unique, représente, en perspective et en coupe partielle, une ligne de transfert selon l'invention.

La ligne de transfert représentée sur la figure unique comporte une conduite 1 de transfert de fluide cryogénique à très basse température, typiquement de l'hélium liquide, ou encore de l'hélium gazeux froid ou de l'hydrogène liquide. La conduite 1 réalisée par exemple en acier inoxydable, est entourée d'une couche ou gaine d'isolation ou de superisolation 2. Parallèlement à la conduite 1 s'étend une conduite de fluide de refroidissement 3, réalisée par exemple en acier inoxydable, convoyant typiquement de l'azote liquide. Des moyens d'entretroisement (non représentés) sont disposés entre les deux conduites 1 et 3.

Conformément à l'invention, les deux conduites 1 et 3 sont entourées d'un écran métallique 4 constitué par bobinage, en une ou plusieurs couches, d'un ruban mince, d'épaisseur typiquement non supérieure à 0,1 mm, d'un métal bon conducteur de la chaleur, typiquement en aluminium d'épaisseur 10 »m.

Le bobinage est réalisé non serré, typiquement de façon lâche, pour ne pas exercer de pression dommageable sur la couche d'isolation 2 entourant le tube 1. Le contact thermique entre l'écran 4 et le tube de refroidissement 3 est obtenu avantageusement par des pinces métalliques élastiques 5 plaquant fortement l'écran 4 en plusieurs points distants les uns des autres sur le tube 3. Le matériau des pinces est choisi pour conserver son élasticité à très basse température. La longueur, la force de serrage et le pas des pinces 5 sont déterminés de façon à obtenir la conduction thermique nécessaire pour maintenir la température de l'écran 4 suffisamment basse et proche de celle du tube de refroidissement. En variante, en substitution des pinces 5, ou, de préférence, en complément de ces derniers, la liaison entre l'écran 4 et le tube de refroidissement 3 est assurée, en des zones déterminées, par interposition d'une couche 6 de colle, de résine, de ciment ou d'un métal mou tel que l'indium.

La ligne de transfert qui vient d'être décrite est classiquement disposée dans une enveloppe étanche 7 dans laquelle est créé et maintenu un vide à une pression inférieure à 10⁻³ Pa, l'isolation étant avantageusement complétée par une gaine d'isolant ou de superisolant 8 entourant l'écran 4 et ses pinces 5, à l'intérieur de l'enveloppe 7.

## Revendications

1. Ligne de transfert de fluide cryogénique comprenant une conduite de transfert de fluide cryogénique (1), une conduite de fluide de refroidissement (3) et une feuille métallique (4) formant écran, bobinée autour des conduites (1, 3) et couplée thermiquement à la conduite de refroidissement (3), caractérisée en ce que la feuille (4) est bobinée de façon lâche autour des conduites (1, 3) et en ce que la ligne comprend une pluralité de moyens de liaison (5, 6) espacés le long de la conduite de refroidissement (3) pour solidariser localement la feuille à cette dernière.

2. Ligne selon la revendication 1, caractérisée en ce que les moyens de liaison comprennent des moyens de serrage mécaniques (5).

3. Ligne selon la revendication 2, caractérisée en ce que les moyens de serrage (5) sont constitués de pinces élastiques.

4. Ligne selon l'une des revendications 1 à 3, caractérisée en ce que les moyens de liaison comprennent une couche (6) d'un matériau de liaison interposée entre la feuille (4) et la conduite de refroidissement (3).

5. Ligne selon l'une des revendications 1 à 4, caractérisée en ce que la feuille (4) a une épaisseur non supérieure à 0,1 mm.

6. Ligne selon l'une des revendications 1 à 5, caractérisée en ce que la feuille (4) est en aluminium.

7. Ligne selon l'une des revendications 1 à 6, caractérisée en ce que la ligne de transfert (1) est entourée d'une première gaine d'isolant (2).

8. Ligne selon l'une des revendications 1 à 7, caractérisée en ce qu'elle comprend une deuxième gaine d'isolant (8) entourant la feuille (4).

9. Ligne selon l'une des revendications précédentes, caractérisée en ce qu'elle est disposée dans une enveloppe étanche (7).

## Claims

1. Cryogenic-fluid transfer line comprising a cryogenic-fluid transfer pipe (1), a cooling-fluid pipe (3) and a metal sheet (4) forming a screen, wound around the pipes (1, 3) and thermally coupled to the cooling pipe (3), characterised in that the sheet (4) is wound loosely around the pipes (1, 3) and in that the line comprises a plurality of connecting means (5, 6) spaced along the cooling pipe (3) in order to attach the sheet locally to the latter.

2. Line according to Claim 1, characterised in that the connecting means comprise mechanical clamping means (5).

3. Line according to Claim 2, characterised in that the clamping means (5) consist of elastic clips.

4. Line according to one of Claims 1 to 3, characterised in that the connecting means comprise a layer (6) made from a connecting material interposed between the sheet (4) and the cooling pipe (3).

5. Line according to one of Claims 1 to 4, characterised in that the sheet (4) has a thickness no greater than 0.1 mm.

6. Line according to one of Claims 1 to 5, characterised in that the sheet (4) is made from aluminium.

7. Line according to one of Claims 1 to 6, characterised in that the transfer line (1) is surrounded by a first insulating sheath (2).

8. Line according to one of Claims 1 to 7, characterised in that it comprises a second insulating sheath (8) surrounding the sheet (4).

9. Line according to one of the preceding claims, characterised in that it is disposed inside an impervious casing (7).

## Patentansprüche

1. Leitung zum Transport von kryogenem Fluid, mit einer Rohrleitung (1) für den Transport von kryogenem Fluid, einer Rohrleitung (3) für Kühlfluid und einer einen Schirm bildenden Metallfolie (4), die um die Rohrleitungen (1, 3) gewickelt und mit der Kühlrohrleitung (3) thermisch gekoppelt ist, **dadurch gekennzeichnet**, daß die Folie (4) locker um die Rohrleitungen (1, 3) gewickelt ist und daß die Leitung eine Vielzahl von Verbindungseinrichtungen (5, 6) aufweist, die entlang der Kühlrohrleitung (3) beabstandet sind, um die Folie mit letzterer örtlich zu verbinden.

2. Leitung nach Anspruch 1, dadurch gekennzeichnet, daß die Verbindungseinrichtungen mechanische Klemmeinrichtungen (5) umfassen.

3. Leitung nach Anspruch 2, dadurch gekennzeichnet, daß die Klemmeinrichtungen (5) aus elastischen Klammern bestehen.

4. Leitung nach einem der Ansprüche 1 bis 3, dadurch gekennzeichnet, daß die Verbindungseinrichtungen eine Schicht (6) aus einem Verbindungsmaterial umfassen, die zwischen die Folie (4) und die Kühlrohrleitung (3) eingefügt ist.

5. Leitung nach einem der Ansprüche 1 bis 4, dadurch gekennzeichnet, daß die Folie (4) eine Dicke von nicht mehr als 0,1 mm hat.

6. Leitung nach einem der Ansprüche 1 bis 5, dadurch gekennzeichnet, daß die Folie (4) aus Aluminium ist.

7. Leitung nach einem der Ansprüche 1 bis 6, dadurch gekennzeichnet, daß die Transportrohrleitung von einem ersten Isoliermantel (2) umgeben ist.

8. Leitung nach einem der Ansprüche 1 bis 7, dadurch gekennzeichnet, daß sie einen zweiten, die Folie (4) umgebenden Isoliermantel (8) aufweist.

9. Leitung nach einem der vorhergehenden Ansprüche, dadurch gekennzeichnet, daß sie in einer dichten Ummantelung (7) angeordnet ist.
